# EUROPÄISCHE PATENTSCHRIFT

(11) **EP 0 807 576 B1**
(45) Veröffentlichungstag und Bekanntmachung des Hinweises auf die Patenterteilung: **14.08.2002**
(21) Anmeldenummer: 97104818.6
(22) Anmeldetag: 21.03.1997
(51) Int. Cl.: B64D 33/08, B64D 33/02, B64D 27/14

(54) **Ejektor-Ölkühlsystem für ein Flugzeug-Hilfstriebwerk**
Ejector oilcooler system for an auxiliary power unit of an aircraft
Système éjecteur pour le refroidissement d'huile pour un générateur auxiliaire d'aéronef

(30) Priorität: 15.05.1996 DE 19619535
(43) Veröffentlichungstag der Anmeldung: 19.11.1997
(73) Patentinhaber: Airbus Deutschland GmbH, 21129 Hamburg (DE)
(72) Erfinder: Winter, Andreas, Dipl.-Ing., 21635 Jork (DE); Hiebel, Volker, Dipl.-Ing., 21763 Hamburg (DE); Korus, Andreas, Dipl.-Ing., 21720 Guderhandviertel (DE)
(74) Vertreter: Hansmann, Dierk, Dipl.-Ing.

(56) Entgegenhaltungen:
- EP-A- 0 743 247
- GB-A- 723 406
- US-A- 1 803 156
- US-A- 5 265 408

## Beschreibung

Die Erfindung betrifft ein Ejektor-Ölkühlsystem für ein Flugzeug-Hilfstriebwerk, welches im Einbauraum der Heckspitze eines Flugzeuges angeordnet ist, wobei der Einbauraum über eine Wartungsklappe zugänglich ist, wobei eine Strahlpumpe die kinetische Energie des Abgasstrahles des Hilfstriebwerkes zur Erzeugung einer Saugströmung verwendet, und wobei durch die Saugströmung Kühlluft aus dem Einbauraum durch den ölkühler hindurchgesaugt wird.

Bei den meisten bekannten Flugzeug-Hilfstriebwerken werden Gebläse benutzt, um Kühlluft für die Kühlung des Einbauraumes und des Ölkühlsystems bereitzustellen. Eine andere Möglichkeit besteht darin, die kinetische Energie des Abgasstrahles des Hilfstriebwerkes mit Hilfe einer Strahlpumpe auszunutzen, um einen durch einen ölkühler strömenden Kühlluftstrom zu erzeugen. Aufgrund der Strahlpumpe, für deren einwandfreie Funktion eine ausreichende Menge von Saugluft vorhanden sein muß, erübrigt sich dann die Verwendung eines Gebläses.

Aus der US-PS 4,504,030 sind Kühlungsmittel zur Kühlung eines energieerzeugenden Aggregates, welches auf einem Flugzeug-Gehäusemotor in einer Gondel befestigt ist, ohne Verwendung eines Gebläses bekannt. Dieses Aggregat ist in einem Kühlkanal eingebaut, der je nach den Druckverhältnissen an den öffnungen mit der Umgebung von Kühlluft durchströmt wird. Es wird das Druckgefälle an der Austrittsöffnung und an der Eintrittsöffnung zur Erzeugung des Kühlluftstromes ausgenutzt.

In der DE-PS 733 564 ist eine Vorrichtung zur Kühlung eines Motorkühlers eines Luftfahrzeuges beschrieben, dem die an der Stirnfläche eines luftumströmten Körpers abgezapfte Kühlluft nach Umlemkung um 180° zugeleitet und an einer Stelle des Flugzeuges, an der im Flug Unterdruck herrscht, abgeleitet wird. Auch bei dieser Anordnung wird eine vorhandene Druckdifferenz ausgenutzt, um einen Kühler durch Umgebungsluft ohne Einschaltung eines Gebläses lediglich durch entsprechende Anordnung der Zu- und Abströmöffnungen am Flugzeug von Kühlluft durchströmen zu lassen.

Aus der US-PS 1,803,156 ist ein luftgekühlter Wärmetauscher für strahlgetriebene Fahrzeuge bekannt, wobei anstelle eines Gebläses eine besondere Anordnung von Luftzuführung und Luftabführung vorgesehen ist. Ein Hinweis auf die Verwendung einer Strahlpumpe ist dieser Druckschrift nicht zu entnehmen.

Die US-PS 5 265 408 zeigt ein Ejektor-Ölkühlsystem für ein Flugzeug-Hilfetriebwerk, welches im Einbauraum der Heckspitze eines Flugzeuges angeordnet ist, wobei der Einbauraum über eine Wartungsklappe zugänglich ist, wobei eine Strahlpumpe die kinetische Energie des Abgasstrahles des Hilfstriebwerkes zur Erzeugung einer Saugströmung verwendet, und wobei durch die Saugströmung Kühlluft aus dem Einbauraum durch den Ölkühler hindurchgesaugt wird, und wobei ein mit der Außenhaut bündig abschließender Lufteinlauf angeordnet ist, durch den für den Betrieb am Boden Luft aus der Flugzeugumgebung in den Einbauraum zum Ölkühler angesaugt wird und durch den im Flugbetrieb ein Teil der das Flugzeug umströmenden Luft einströmt.

Der Erfindung liegt die Aufgabe zugrunde, ein Ejektor-Ölkühlsystem für ein Flugzeug-Hilfstriebwerk zu schaffen, durch welches eine einwandfreie Kühl-Funktion des ölkühlers sowohl bei Betrieb am Boden als auch bei Flugbetrieb sichergestellt ist.

Die Aufgabe wird mit einem Ejektor-Ölkühlsystem gemaβ Anspruch 1 gelöst.

Das erfindungsgemäße Ejektor-Ölkühlsystem arbeitet nach dem eingangs beschriebenen Prinzip einer Strahlpumpe, indem es die kinetische Energie des Abgasstrahles des Hilfstriebwerkes ausnutzt, um eine Saugströmung für die durch den ölkühler hindurchgesaugte Kühlluft zu erzeugen. Die hierfür in dem Einbauraum erforderliche Luftmenge wird vorteilhafterweise für zwei extreme Fälle, nämlich für den Betrieb am Boden bei hohen Umgebungstemperaturen von z.B. 50°C und den Betrieb im Fluge bei aufgrund der Rekompression am Flugzeugheck auftretendem Überdruck sowie damit am Abgasrohr auftretendem Gegendruck, mittels der als wesentlichen Bestandteil des ölkühlsystems anzusehenden Lufteinlauföffnung 30 bereitgestellt.

Ausgestaltungen der Erfindung sind dadurch gekennzeichnet,
- daß der Lufteinlauf rechteckförmig ausgebildet ist sowie im Lufteintrittsbereich der Struktur des Flugzeuges angepaßt ist, und
- daß der Lufteinlauföffnung ein Diffusor nachgeordnet ist.

Vorteile der Erfindung sind darin zu sehen, daß mit der in der Wartungsklappe angeordneten Lufteinlauföffnung eine einwandfreie Funktion des Ejektor-Ölkühlsystems bei Flugzeug-Hilfstriebwerken mit sehr geringem Bau- und Kostenaufwand ermöglicht wird. Infolge des Wegfallens eines Kühlgebläses werden ein Getriebeantrieb sowie eine Reihe drehender Teile und Wellendichtungen vorteilhafterweise eingespart, so daß eine entscheidende Verminderung der Betriebsund Wartungskosten von mit dem erfindungsgemäßen Ejektorkühlsystem ausgerüsteten Hilfstriebwerken erzielt wird. Außerdem wird vorteilhafterweise ein Eintreten von ölleckagen des vormals existierenden Gebläses in die Kühlluft des ölkühlers völlig verhindert.

In der Zeichnung sind Ausführungsbeispiele der Erfindung schematisch dargestellt. Es zeigen:
- Fig. 1:: ein Funktions-Schema eines ejektor-betriebenen Ölkühlsystems,
- Fig. 2:: den räumlichen Einbau eines Hilfstriebwerkes mit ölkühler und Wartungsklappe in der Heckspitze eines Flugzeuges, und
- Fig. 3:: einen Ausschnitt einer Wartungsklappe mit einer Lufteinlauföffnung im Schnitt.

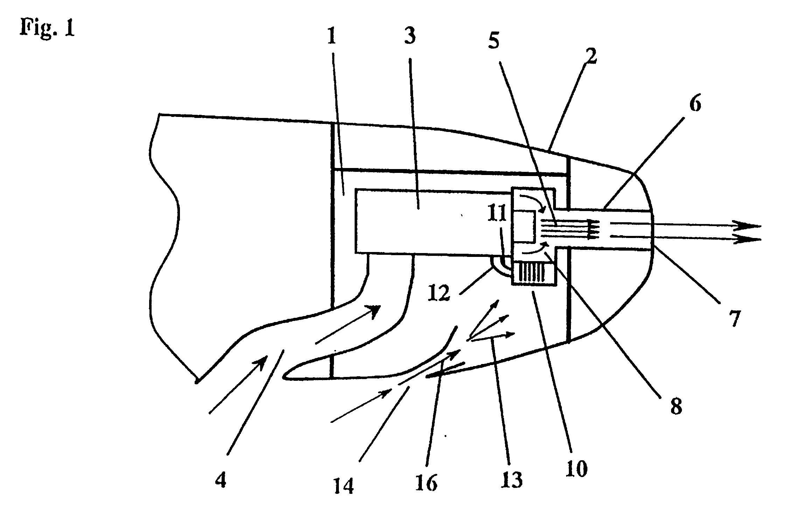

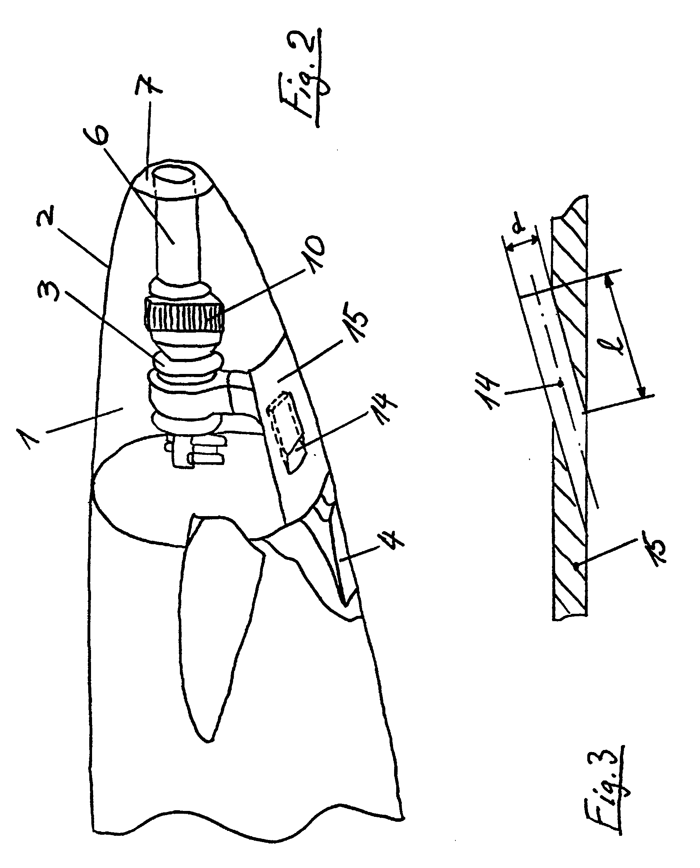

In Fig. 1 ist im Einbauraum 1 einer Flugzeug-Heckspitze 2 ein Hilfstriebwerk 3 angeordnet, dessen Hilfsturbinenlufteinlauf mit 4 und dessen den Abgasstahl 5 aufnehmendes Abgasrohr mit 6 bezeichnet sind. Unmittelbar in der Nähe des Anschlußbereiches von Hilfstriebwerk 3 und Abgasrohr 6, welches mit seiner Austrittsöffnung in der Heckbasis 7 endet, ist ein Ejektor 8 angeordnet, mit dem ein ölkühler 10 in mechanischer und aerodynamischer Verbindung steht. Dieser ölkühler ist über eine Ölvorlaufleitung 11 und eine Ölrücklaufleitung 12 mit dem ölkreislauf des Hilfstriebwerkes 3 verbunden. Der Kühlluftstrom 13 für den Ölkühler 10 wird dem Einbauraum 1 entnommen, der über eine in einer Wartungsklappe 15 angeordnete Lufteinlauföffnung 14 mit der Umgebung des Flugzeuges in Verbindung steht (wie auch den Fig. 2 und 3 zu entnehmen ist), wobei in Fig. 2 auch weitere Bauelemente aus Fig. 1 in räumlicher Form dargestellt sind. Um einen Druckverlust im Bodenbetrieb zu minimieren, kann es vorgesehen sein, nach der Lufteinlauföffnung 14 einen Diffusor 16 anzuordnen.

Gemäß Fig. 3 wird die Wartungsklappe 15 von der Lufteinlauföffnung 14 durchdrungen, deren Längenmaß mit 1 und deren Höhenmaß mit d bezeichnet sind. Nicht zu ersehen ist das Breitenmaß w der aerodynamischen Lufteinlauföffnung 14. Durch eine vorgegebene Bemessung der genannten Bauteile wird zum einen bei Bodenbetrieb eine möglichst verlustfreie Zuströmung der Kühlluft 13 in den Einbauraum 1 bei großem Massendurchsatz und geringem Druckabfall und zum anderen im Flugbetrieb ein in dem Einbauraum 1 vorhandener ausreichender Überdruck gegenüber dem an der Heckbasis 7 bzw. dem Abgasrohr 6 auftretenden Gegendruck sichergestellt.

### Bezugszeichenliste

- 1: Einbauraum
- 2: Flugzeug-Heckspitze
- 3: Hilfstriebwerk
- 4: Lufteinlauf des Hilfstriebwerkes 3
- 5: Abgasstrahl

- 6: Abgasrohr
- 7: Heckbasis
- 8: Ejektor / Strahlpumpe
- 10: Ölkühler

- 11: Ölvorlaufleitung
- 12: Ölrücklaufleitung
- 13: Kühlluftstrom
- 14: Lufteinlauföffnung
- 15: Wartungsklappe
- 16: Diffusor

## Patentansprüche

1. Ejektor-Ölkühlsystem für ein Flugzeug-Hilfstriebwerk (3), welches im Einbauraum (1) der Heckspitze eines Flugzeuges (2) angeordnet ist, wobei der Einbauraum (1) über eine Wartungsklappe (15) zugänglich ist, wobei eine Strahlpumpe (8) die kinetische Energie des Abgasstrahles (5) Nes Hilfstriebwerkes (3) zur Erzeugung einer Saugströmung verwendet, und wobei durch die Saugströmung Kühlluft aus dem Einbauraum (1) durch einen Ölkühler (10) hindurchgesaugt wird, und wobei in der Wartungsklappe (15) ein mit der Außenhaut bündig abschließender Lufteinlauf (14) angeordnet ist, durch den für den Betrieb am Boden Luft aus der Flugzeugumgebung in den Einbauraum (1) zum ölkühler (10) angesaugt wird und durch den im Flugbetrieb ein Teil der das Flugzeug umströmenden Luft einströmt und unter einem Druckanstieg in den Einbauraum (1) derart eingeführt wird, daß in dem Einbauraum (1) ein Überdruck gegenüber dem am Abgasrohr (6) auftretenden Gegendruck vorhanden ist.

2. Ejektor-Ölkühlsystem nach Anspruch 1, **gekennzeichnet durch** einen rechteckförmig ausgebildeten Lufteinlauf und eine im Lufteintrittsbereich der Struktur des Flugzeuges angepaßte Lufteinlauföffnun (14).

3. Ejektor-Ölkühlsystem nach Anspruch 1 oder 2, **dadurch gekennzeichnet, daß** der Lufteinlauföffnung (14) ein Diffusor (16) nachgeordnet ist.

## Claims

1. An ejector oil-cooler system for an auxiliary power unit (3) in an aircraft which is arranged in the chamber (1) formed in the tail cone of an aircraft (2), wherein said chamber (1) is accessible through a maintenance flap (15), wherein a jet pump (8) utilises the kinetic energy of the exhaust gas jet (5) from the auxiliary power unit (3) for producing a suction current and wherein cooling air is sucked through an oil cooler (10) from the chamber (1) by means of the suction current, and wherein an air intake (14) that is flush with the outer skin is arranged in the maintenance flap (15), air being sucked therethrough from the surroundings of the aircraft into the chamber (1) to the oil cooler (10) when it is operating on the ground whilst some of the air flowing around the aircraft flows therethrough when it is in flight and is introduced under pressure into the chamber (1) in such a manner that the pressure in the chamber (1) is higher than the counter pressure occurring in the exhaust pipe (6).

2. An ejector oil-cooler system in accordance with Claim 1, **characterised by** an air intake which is of rectangular construction and an air intake opening (14) which is matched to the structure of the aircraft in the air inlet region.

3. An ejector oil-cooler system in accordance with Claim 1 or 2, **characterised in that** a diffuser (16) is arranged behind the air intake opening (14).

## Revendications

1. Système éjecteur pour le refroidissement d'huile pour un générateur auxiliaire d'aéronef situé dans l'espace incorporé (1) dans la pointe arrière d'un aéronef (2), **caractérisé en ce que** l'espace incorporé (1) est accessible via un clapet de maintenance (15), **en ce qu'**un injecteur (8) utilise l'énergie cinétique des jets d'échappement (5) du générateur auxiliaire (3) pour produire un flux, **en ce que** ledit flux aspire de l'air froid à travers un système pour le refroidissement d'huile (10), à partir de l'espace incorporé (1), **en ce qu'**une entrée d'air (14) dont l'extrémité affleure avec la paroi externe est disposée dans le clapet d'entretien (15), **en ce que**, au sol, de l'air environnant l'aéronef est aspiré à travers ladite entrée jusque dans l'espace incorporé (1) et enfin jusqu'au système pour le refroidissement d'huile (10), et **en ce que** en situation de vol, une partie de l'air circulant autour de l'aéronef pénètre dans l'aéronef via ladite entrée et est introduit dans l'espace incorporé (1) par augmentation de la pression, de telle sorte qu'une surpression par rapport à la contre-pression exercée sur le tuya d'échappement (6) soit présente dans l'espace incorporé (1).

2. Système éjecteur pour le refroidissement d'huile conforme à la revendication 1, **caractérisé par** une entrée d'air rectangulaire et une ouverture d'admission d'air (14) adaptée à la structure de l'aéronef et située dans la zone d'admission de l'air.

3. Système éjecteur pour le refroidissement d'huile conforme à la revendication 1 ou 2, **caractérisé en ce que** l'ouverture d'admission d'air (14) est postérieure à un diffuseur (16).
